(19) Europäisches Patentamt
European Patent Office
Office européen des brevets

(11) EP 4 332 182 A1

(12) EUROPEAN PATENT APPLICATION

(43) Date of publication:
**06.03.2024 Bulletin 2024/10**

(21) Application number: **22306299.3**

(22) Date of filing: **31.08.2022**

(51) International Patent Classification (IPC):
***C09D 11/17*** (2014.01) ***C09D 11/18*** (2006.01)

(52) Cooperative Patent Classification (CPC):
**C09D 11/17; C09D 11/18**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
- **Société BIC**
  **92110 Clichy (FR)**
- **Université de Haute-Alsace**
  **68200 Mulhouse (FR)**
- **Centre national de la recherche scientifique**
  **75016 Paris (FR)**

(72) Inventors:
- **CAFFIER, Guillaume**
  **92110 Clichy (FR)**
- **GHELLAL, Feriel**
  **92110 Clichy (FR)**
- **MOUGIN, Karine**
  **68210 Valdieu-Lutran (FR)**
- **SPANGENBERG, Arnaud**
  **68720 Flaxlanden (FR)**

(74) Representative: **Peterreins Schley**
**Patent- und Rechtsanwälte PartG mbB**
**Hermann-Sack-Straße 3**
**80331 München (DE)**

# (54) USE OF PLASMONIC INK COMPOSITION ON SYNTHETIC PAPER

(57) In a first aspect, the present disclosure relates to a kit of parts, wherein the kit of parts may comprise a writing instrument comprising a plasmonic ink composition; and a synthetic paper.

**Figure 2**

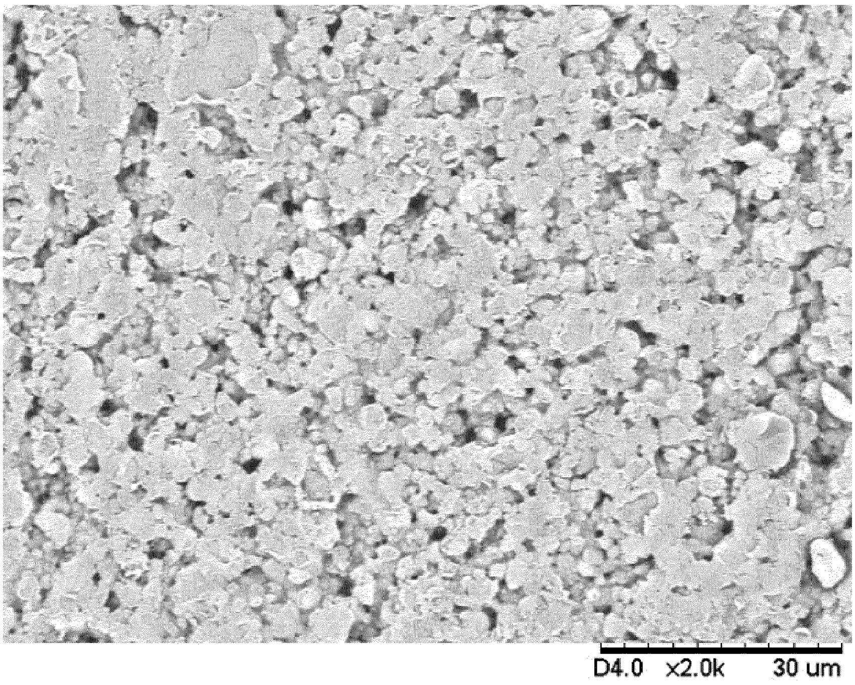


EP 4 332 182 A1

## Description

### Technical Field

The present disclosure relates to the field of plasmonic ink compositions and synthetic paper. More specifically, the present disclosure relates to writing instruments comprising plasmonic ink compositions and their use on synthetic paper.

### Background

Writing instruments such as ballpoint pens comprise inks to produce images, texts or designs. The inks typically comprise pigments or dyes as colorant. However, the production of pigments and dyes, as well as inadequate disposal of dyes and pigments may be harmful to the environment. Very recently plasmonic nanoparticles have emerged as an alternative colorant for writing instrument inks.

Inks comprising plasmonic nanoparticles may be referred to as plasmonic ink compositions. The color of aqueous plasmonic ink compositions may be controlled by adjusting the particle size of the plasmonic nanoparticles. For example, a first ink comprising gold nanoparticles of smaller particle size may show a color closer to blue compared to a second ink comprising gold nanoparticles of a greater particle size, which may show a color closer to red.

Writing instruments comprising inks are commonly used on paper to take notes. When the notes are not needed anymore, the paper is typically discarded, leading to paper waste. Alternatively, users may put to use whiteboards or digital tables. However, white boards bulky, whereas digital tables cannot be used if out of battery and may not be allowed for example in classrooms.

The present disclosure aims to address the aforementioned issues in note taking systems.

### Summary

In a first aspect, the present disclosure relates to a kit of parts, wherein the kit of parts comprises a writing instrument comprising a plasmonic ink composition; and a synthetic paper.

In some embodiments, the synthetic paper, in particular an outer layer of the synthetic paper, may comprise a first polymer, more specifically non-polar polymer, in particular a polyolefin.

In some embodiments, the first polymer may comprise polypropylene, polyethylene, a polyvinyl and/or an acrylate polymer, in particular biaxially oriented polypropylene and/or high-density polyethylene.

In some embodiments, the synthetic paper, in particular an inner layer of the synthetic paper, may comprise a second polymer, more specifically a polymer comprising styrene, in particular polystyrene or copolymers thereof.

In some embodiments, the synthetic paper, in particular the outer layer, may comprise a filler, more specifically an inorganic filler and in particular calcium carbonate.

In some embodiments, the synthetic paper, in particular the outer layer, may comprise between about 5 wt.-% to about 95 wt.-%, more specifically between about 50 wt.-% to about 90 wt.-% and in particular between about 75 wt.-% to about 85 wt.-% of the filler, relative to the total weight of the synthetic paper.

In some embodiments, the synthetic paper may comprise between about 5 wt.-% to about 100 wt.-%, more specifically between about 10 wt.-% to about 50 wt.-% and in particular between about 15 wt.-% to about 25 wt.-% of the first and second polymer, relative to the total weight of the synthetic paper.

In some embodiments, the inner layer may comprise between about 5 wt.-% to about 80 wt.-%, more specifically between about 10 wt.-% to about 50 wt.-% and in particular between about 15 wt.-% to about 30 wt.-% of the second polymer, relative to the total weight of the inner layer.

In some embodiments, the outer layer may comprise between about 50 wt.-% to about 100 wt.-%, more specifically between about 70 wt.-% to about 95 wt.-% and in particular between about 70 wt.-% to about 90 wt.-% of the first polymer, relative to the total weight of the outer layer.

In some embodiments, the synthetic paper, in particular the outer layer, may comprise less than 10 wt.-%, more specifically less than 5 wt.-% of fibers.

In some embodiments, the synthetic paper, in particular the outer layer, may comprise less than 10 wt.-%, more specifically less than 5 wt.-% and in particular no cellulose.

In some embodiments, the synthetic paper may be waterproof and/or water-resistant.

In some embodiments, the synthetic paper may exhibit an arithmetical mean roughness, Ra, between about 0.3 $\mu$m to about 5 $\mu$m, more specifically between about 0.4 $\mu$m to about 4 $\mu$m and in particular between about 1 $\mu$m to about 3.5 $\mu$m.

In some embodiments, the synthetic paper, in particular the outer layer, may comprise between about 5 vol.-% to about 95 vol.-%, more specifically between about 15 vol.-% to about 85 vol.-% and in particular between about 25

vol.-% to about 75 vol.-% of pores.

In some embodiments, the plasmonic ink composition may comprise metal nanoparticles.

In some embodiments, the metal nanoparticle's average particle size may be between about 1 to 200 nm, more specifically from 2 to 100 nm, more specifically from 5 to 100 nm.

In some embodiments, the plasmonic ink composition may comprise between about 0.5 to 2.5 wt.-%, more specifically from 0.6 - 2.0 wt.-%, more specifically from 0.65 to 1. wt.-%, and in particular more specifically from 0.7 to 1.4 wt.-% of the metal nanoparticles, relative to the total weight of the plasmonic ink composition.

In some embodiments, the metal nanoparticles may comprise at least one metal chosen from copper, silver and/or gold, more specifically silver and/or gold and in particular silver.

In some embodiments, the metal nanoparticles may comprise at least 90 wt.-%, more specifically at least 99 wt.-% of the metal and in particular wherein the nanoparticles consist of the metal, except for technically unavoidable impurities.

In some embodiments, the plasmonic ink composition may comprise citrate ions and/or mono-hydrogen citrate ions.

In a second aspect, the present disclosure relates to a use of a writing instrument to apply a plasmonic ink composition on a synthetic paper.

In some embodiments, according to the second aspect the plasmonic ink composition may be wiped with a wet cloth, after application.

In some embodiments, according to the second aspect the plasmonic ink composition may display a first intensity after application, in particular after drying, and the plasmonic ink composition may display a second intensity after being wiped with a wet cloth, in particular wherein the second intensity is lower than the first intensity by at least 50%, more specifically by at least 80% and in particular by at least 90%.

In some embodiments, according to the second aspect between applying and wiping a duration of at least 5 minutes, more specifically of at least 1 hour, even more specifically at least 168 hours and in particular at least 720 hours may have elapsed.

In a third aspect, the present disclosure relates to a method for writing on a writing substrate, wherein the method may comprise applying a plasmonic ink composition using a writing instrument on a writing substrate, and wiping away the plasmonic ink composition using a wet cloth.

In some embodiments, according to the third aspect the writing substrate may be a synthetic paper.

In some embodiments, according to the third aspect the method additionally may comprise acquiring an image of the plasmonic ink composition applied on the synthetic paper; and digitally processing the acquired image before wiping away the plasmonic ink composition.

## Brief Description of Figures

**Figure 1** schematic view of the structure of a synthetic paper according to an embodiment.

**Figure 2** shows a synthetic paper comprising calcium carbonate fused together by a polymer.

**Figure 3** shows plasmonic nanoparticles in an aqueous ink.

## Detailed Description

Hereinafter, a detailed description will be given of the present disclosure. The terms or words used in the description and the aspects of the present disclosure are not to be construed limitedly as only having common-language or dictionary meanings and should, unless specifically defined otherwise in the following description, be interpreted as having their ordinary technical meaning as established in the relevant technical field. The detailed description will refer to specific embodiments to better illustrate the present disclosure, however, it should be understood that the presented disclosure is not limited to these specific embodiments.

The present disclosure relates to writing instruments comprising plasmonic ink compositions. The terms "plasmonic ink" and "plasmonic ink composition" will be used interchangeably in the following. The ink (or ink composition) may provide a plasmonic effect, i.e. be a plasmonic ink. The term "plasmonic ink" is well-known in the art and *i.a.* attributed its common meaning in the art. Additionally or alternatively, the term "plasmonic ink" may refer to an ink comprising plasmonic structures. Additionally or alternatively, the term "plasmonic ink" may refer to an ink comprising plasmonic nanoparticles, in particular plasmonic metal nanoparticles. The term "plasmonic (metal) nanoparticles" is well-known in the art and i.a. attributed its common meaning in the art. Additionally or alternatively, the term "plasmonic (metal)

nanoparticles" may refer to particles, whose electron density can couple with electromagnetic radiation of wavelengths greater than the particle due to a dielectric-metal interface between the particles and the medium the particles are dispersed within. The coupling with electromagnetic radiation may be referred to as plasmonic effect. Additionally or alternatively, the term "plasmonic (metal) nanoparticles" may refer to particles configured to form plasmonic clusters with adjacent plasmonic nanoparticle(s). The coupling with adjacent plasmonic nanoparticles may result in plasmonic coupling. The plasmonic clusters may form a type of bonding or antibonding character between the plasmonic nanoparticles similar to molecules, in particular by the surface electrons of each particles collectively oscillating. Two (metal) nanoparticles may in particular form a plasmonic cluster if the distance between the (metal) nanoparticles is less than the diameter of a particle. Both the plasmonic effect, as well as the plasmonic coupling may influence the color of a plasmonic ink composition, in particular by changing the light absorption and light scattering characteristics. Further, both the plasmonic effect and plasmonic coupling depend on the particle size of the (metal) nanoparticle. The above-mentioned plasmonic effect can be characterized by UV (ultraviolet)-visible-NIR (near infra-red) absorption spectroscopy.

As mentioned above plasmonic ink compositions are novel type of inks which may be used to take notes on writing substrates, such as paper. However, plasmonic ink compositions deposited on paper may be difficult to erase. More specifically, plasmonic ink compositions may only be erasable from paper using strong chemical agents, such as strong oxidizers, which may require the use of a dedicated eraser tool comprising said chemicals. Further, said chemical agents may, at least for some time, remain on the surface of the writing substrate. As a result, when a plasmonic ink composition is again applied to the paper, it may again be erased by the remaining chemical agents. As a result, the user may require a second writing instrument comprising a different ink, to write again on the paper surface where the chemical agents were applied, e.g. to reuse the paper or to correct errors.

It has been surprisingly found that a plasmonic ink composition can be used to mark a writing substrate, in particular a synthetic paper, while being erasable from said writing substrate, even after drying of the plasmonic ink composition. In particular it has been found, that the plasmonic ink can be used to mark the synthetic paper and being resistant to smudging when wiped with a dry cloth or rubbed with a finger, allowing the provision of lasting notes. Further, rinsing the synthetic paper with water may only result in a slight discoloration of the plasmonic ink, e.g. the notes may turn from black to brown. However, when the notes are rubbed with a wet cloth the notes may substantially be removed. The rubbing action may need to be executed for a duration of for example at least 3 seconds, more specifically at least 5 seconds. As a result, the writing substrate can be used for taking lasting notes, while at the same time being reusable as it can be wiped with a wet cloth. Furthermore, the process is repeatable, as after wiping with the cloth, the plasmonic ink composition may be used on the same part of the writing substrate again. As a result, the user can correct errors and reuse the page, without causing damage or alterations on the substrate. Further, the user may easily erase an entire page using a cloth, whereas chemical agents can usually only be applied locally when using an ink eraser pen. As a result, reusing an entire page is significantly facilitated.

Hence. in a first aspect, the present disclosure relates to a kit of parts, wherein the kit of parts comprises a writing instrument comprising a plasmonic ink composition and wherein the kit of parts additionally comprises a synthetic paper.

<u>The Synthetic Paper</u>

The term "synthetic paper" is well known in the art and i.a. (inter alia) attributed its common meaning in the art. Additionally or alternatively, the term "synthetic paper" may relate to a writing substrate comprising a synthetic polymer, in particular a polymer selected from polyolefins, polyesters, polyethers, polyketones, polyamides, polyvinyls and polystyrenes. The synthetic paper may be waterproof and/or water-resistant. The term "waterproof' is well-known and i.a. attributed its common meaning in the art. Additionally or alternatively, the term "waterproof' may refer to a material being impervious or substantially impervious to water. Determining whether the synthetic paper is waterproof in the above sense is not particularly limited and can be done by e.g. the following procedure: A piece of synthetic paper is folded to a cup-like shape and filled with water such that at least the bottom of the cup is covered with a layer of 10 mm of water. The synthetic paper is considered waterproof if the paper face opposite to the paper face forming the bottom of the cup remains dry for a time period of at least 3 minutes. Similarly, the term "water-resistant" is well-known and i.a. attributed its common meaning in the art. Additionally or alternatively, the term "waterproof' may refer to a material not being significantly damaged or damaged by contact with water. The synthetic paper may comprise for example a water-resistant polymer, e.g. a polymer that is insoluble in water and/or does not significantly swell in water. Further, the polymer may be substantially impervious to water.

So far it has not been possible to clearly determine the mechanism of erasure of the plasmonic ink composition from synthetic paper by wiping with a wet cloth. Without wishing to be bound by theory, it has been considered that wiping with a wet cloth results in the plasmonic ink composition present on the surface of the synthetic paper being spread out. As a result, the distance between the plasmonic nanoparticles may increase, which in turn may prevent the effect of plasmonic clustering, hence removing the coloration. This effect may not take place when used on regular

cellulosic paper, as clusters may become embedded in/adhered to the cellulose fibers, preventing their distribution. Additionally, cellulosic paper may tear when rubbed with a wet cloth. Alternatively, it has been considered, that the plasmonic nanoparticles cannot enter the synthetic paper, in particular as it may be water-impermeable, and can therefore be wiped away, whereas the plasmonic nanoparticles can enter cellulosic paper, preventing them from being wiped away. As cellulosic paper can absorb water, the addition of water to cellulosic paper may also lead to the nanoparticles being embedded deeper into the cellulosic paper when water is added. In particular, fibers present in the cellulosic paper may soften when absorbing water, which may allow the plasmonic nanoparticles to be embedded within or between the fibers. Opposed thereto, the nanoparticles may be repelled from the water-resistance and/or waterproof synthetic paper.

The synthetic paper may also comprise multiple layers. Figure 1 shows an exemplary synthetic paper. The exemplary synthetic paper shown in Figure 1 comprises a first layer 110, second layer 120 and third layer 130. The second layer 120 may be disposed between the first layer 110 and the third layer 130. In some embodiments, the first layer 110 and third layer 130 may comprise a synthetic polymer, in particular a synthetic polymer impervious to water and/or which does not significantly swell in water. In some embodiments, the second layer 120 may comprise a filler in a polymer matrix, for example a white mineral in a polymer matrix. The filler in the polymer matrix may provide opacity to the paper and/or provide it with a white color. The second layer 120 may also be used to control the mechanical properties of the synthetic paper. For example, the second layer 120 may provide the synthetic paper with tear-resistance and/or give it a paper-like flexibility. The second layer 120 may be substantially thicker compared to the first layer 110 and third layer 130, thus having a greater influence on the mechanical properties of the synthetic paper. The second layer may also be non-waterproof and/or non-water-resistant but protected from water by the first layer 110 and third layer 130. Further, the second layer 120 may comprise cellulose, more specifically the second layer 120 may comprise paper. The synthetic paper may also comprise more than 3 layers, for example 4, 5 or 6 layers. A layer of the synthetic paper disposed on the outside, e.g. such that it can be written upon, may be referred to as "outer layer". A layer which cannot be accessed, e.g. a layer disposed between two outer layers, may be referred to as inner layer. The synthetic paper may comprise a first and a second outer layer with different properties. For example, the first outer layer may be more suitable for aqueous inks and a second outer layer suitable for solvent-based inks. The first layer 110 and third layer 130 of Figure 1 can be considered as outer layers and the second layer 120 an inner layer.

In some embodiments, the synthetic paper, in particular an outer layer of the synthetic paper, may comprise a first polymer, more specifically non-polar polymer, in particular a polyolefin. For example, the first polymer may comprise polypropylene, polyethylene, a polyvinyl and/or an acrylate polymer, in particular biaxially oriented polypropylene and/or high-density polyethylene. In some embodiments, the outer layer may comprise between about 50 wt.-% to about 100 wt.-%, more specifically between about 70 wt.-% to about 95 wt.-% and in particular between about 70 wt.-% to about 90 wt.-% of the first polymer, relative to the total weight of the outer layer.

In some embodiments, the synthetic paper, in particular an inner layer of the synthetic paper, may comprise a second polymer, more specifically a polymer comprising styrene, in particular polystyrene or copolymers thereof. Alternatively or additionally, the second polymer may comprise polyethylene or polyethylene terephthalate.

In some embodiments, the synthetic paper, in particular the outer layer, may comprise a filler, more specifically an inorganic filler, even more specifically a mineral filler, and in particular calcium carbonate. In some embodiments, the filler may exhibit a water solubility at 25°C of less than 50 mg/L The filler may be present in the form of particles, in particular in the form of particles with a $D_{50}$ between about 0.1 $\mu$m to about 10 $\mu$m. The filler may provide opacity to the synthetic paper and/or provide the synthetic paper with a white color.

In some embodiments, the synthetic paper, in particular the outer layer, may comprise between about 5 wt.-% to about 95 wt.-%, more specifically between about 50 wt.-% to about 90 wt.-% and in particular between about 75 wt.-% to about 85 wt.-% of the filler, relative to the total weight of the synthetic paper. The filler may be fused together by a polymer, in particular the first polymer. Hence, in some embodiments, the outer layer may comprise between about 5 wt.-% to about 80 wt.-%, more specifically between about 10 wt.-% to about 50 wt.-% and in particular between about 15 wt.-% to about 30 wt.-% of the first polymer, relative to the total weight of the outer layer. The filler, in particular if in the form of particles, may only be partially coated by the polymer, thereby forming a substantial part of the synthetic paper's outer surface, as shown in Figure 2.

The filler in the outer layer may improve the writing properties of the synthetic paper, more specifically improve the uniformity of ink deposition of the plasmonic ink composition on the synthetic paper. For example, the filler in the outer layer may increase the arithmetical mean roughness of the synthetic paper, which will be discussed in more detail below. Additionally, the filler may improve the haptic properties of the synthetic paper.

In some embodiments, the above filler, may also be present in the inner layer.

Additionally or alternatively, the filler may comprise cellulose, in particular if the filler is substantially only present in the inner layer.

In some embodiments, the synthetic paper may comprise between about 5 wt.-% to about 100 wt.-%, more specifically between about 10 wt.-% to about 50 wt.-% and in particular between about 15 wt.-% to about 25 wt.-% of the first and second polymer, relative to the total weight of the synthetic paper.

In some embodiments, the synthetic paper, in particular the outer layer, may comprise less than 10 wt.-%, more specifically less than 5 wt.-% of fibers, in particular natural fibers. In some embodiments, the synthetic paper, in particular the outer layer, may comprise less than 10 wt.-%, more specifically less than 5 wt.-% of wood pulp. In some embodiments, the synthetic paper, in particular the outer layer, may comprise less than 10 wt.-%, more specifically less than 5 wt.-% and in particular no cellulose. Cellulose may also be present in the form of fibers. Fibers, in particular cellulose fibers in the outer layer, may allow the plasmonic ink composition to penetrate into the cellulose fibers or between adjacent cellulose fibers, which may then subsequently result in not removing the plasmonic ink composition.

As will be readily appreciated by someone skilled in the art, some synthetic papers may only be marked by certain writing instruments, e.g. felt-tip pens. Some synthetic papers may not be efficiently marked with for example ball-point pens, as the ball disposed within the ball-point pens may skid along the surface of the synthetic paper due to a too low surface roughness. Additionally, some synthetic papers may require optimized ink formulations which facilitate writing in clear even lines. For example, some aqueous inks may tend to agglomerate resulting in fragmented lines on very hydrophobic synthetic papers and may thus profit from a more lipophilic binder system. However, adjusting these properties and properly matching synthetic papers to appropriate inks is a routine task for the skilled person. Moreover, on a synthetic paper with a higher surface roughness the disposed ink may more easily form coherent lines, as the plasmonic ink composition may more readily wet the synthetic paper's surface. Furthermore, a higher arithmetical mean roughness may prevent smudging of the ink, e.g. by a dry finger, as the ink and/or plasmonic nanoparticles may be supported by the roughness of the synthetic paper. Hence, in some embodiments, the synthetic paper may exhibit an arithmetical mean roughness, Ra, between about 0.3 $\mu$m to about 5 $\mu$m, more specifically between about 0.4 $\mu$m to about 4 $\mu$m and in particular between about 1 $\mu$m to about 3.5 $\mu$m. A lower roughness may facilitate and improve wiping away the plasmonic ink composition. On the other hand, a certain minimum roughness may improve the ink deposition by the writing instrument on the synthetic paper. The arithmetical mean roughness may be measured for example using a TIME3200 - Surface Roughness Tester by the company Checkline, USA. The arithmetical mean roughness may be measured according to ISO 3274:1996-12 or DIN EN ISO 4287:2010-07. The arithmetical mean roughness is naturally measured on an outer surface, in particular an outer surface of the outer layer, of the synthetic paper.

The arithmetical mean roughness may i.a be governed by the synthetic paper's porosity. Hence, in some embodiments, the synthetic paper, in particular the outer layer, may be porous. The synthetic paper, in particular the outer layer, may comprise between about 5 vol.-% to about 95 vol.-%, more specifically between about 15 vol.-% to about 85 vol.-% and in particular between about 25 vol.-% to about 75 vol.-% of pores. The pores may increase the arithmetical mean roughness of the synthetic paper.

## The ink

In some embodiments, the plasmonic ink composition may comprise metal nanoparticles. In some embodiments, the plasmonic ink composition is an aqueous ink, in particular an aqueous gel ink comprising metal nanoparticles wherein the metal nanoparticles are consisting essentially of metal.

In the sense of the present disclosure, the term "metal nanoparticles consisting essentially of metal" is intended to mean that the main component of the nanoparticles is metal and in particular that other ingredients in the metal nanoparticles such as impurities, such as metal oxides (silver oxide, gold oxide, copper oxide, aluminum oxide) are only present in trace amount. More specifically the content of metal is of at least 95%, even more specifically of at least 98% by weight, relative to the total weight of nanoparticles. More specifically the content of impurities is lower than 5%, even more specifically lower than 2%, by weight, relative to the total weight of nanoparticles.

In some embodiments, the metal nanoparticles consist only of metal.

In some embodiments, the aqueous writing ink composition is essentially free or free of iron, in particular of iron powder.

In some embodiments, the aqueous gel ink comprises the metal nanoparticles as the only coloring agent.

In some embodiments, the metal of the metal nanoparticles comprises silver, gold or a mixture thereof. In some embodiments, it may be particularly advantageous that the metal nanoparticles are silver nanoparticles.

In some embodiments, the metal nanoparticles are contained within the aqueous gel ink in an amount of 0.5 to 2.5 wt.-%, more specifically from 0.6 - 2.0 wt.-%, more specifically from 0.65 to 1. wt.-%, and in particular more specifically from 0.7 to 1.4 wt.-%, relative to the total weight of the ink.

In some embodiments, the metal nanoparticles of the aqueous gel ink have an average particle size ranging from 1 to 200 nm, specifically from 2 to 100 nm, more specifically from 5 to 100 nm. More specifically the longest dimension of the metal nanoparticles is ranging from 1 to 200 nm, even more specifically from 2 to 100 nm, still more specifically from 5 to 100 nm. More specifically all the dimensions of the metal nanoparticles are ranging from 1 to 200 nm, even more specifically from 2 to 100 nm, still more specifically from 5 to 100 nm. This average particle size and the dimension of the particles may be determined by analysis of 2D images (microscope: JEOL ARM 200), according to the standard ISO9001:2015.

In some embodiments, the aqueous gel ink comprises metal nanoparticles having a non-spherical shape, more specifically an asymmetric shape, and in particular a shape selected from platelets, rods, wires (in particular pentagonal, Y-shaped, K-shaped and multi-branched wires), bars, faceted near-spherical shapes, prisms, flower shapes, polyhedral shapes, triangular shapes, bipyramidal shapes, truncated triangular shapes, square shapes, rectangular shapes, hexagonal plates, urchins shapes or even irregular shapes. In some embodiments, it may be particularly advantageous that the aqueous gel ink comprises metal nanoparticles having an urchin shape and/or a polyhedral shape. Fig. 3 shows plasmonic nanoparticles comprised within an aqueous plasmonic ink composition.

In some embodiments, the aqueous gel ink comprises a dispersing agent (which may also be called stabilizing agent). The type of dispersing agent is not particularly limited and suitable types include non-ionic and ionic dispersing agents. In some embodiments, the dispersing agent comprises a non-ionic dispersing agent. In some embodiments, the non-ionic dispersing agent may be configured to aggregate on the surface of the metal nanoparticles. In some embodiments, a non-ionic dispersing agent may have the weight-average molecular weight of above 5 kDa, specifically between 15 and 2000 kDa, more specifically between 30 and 500 kDa, even more specifically between 80 and 350 kDa. In some embodiments, the non-ionic dispersing agent may have one or more and in particular all of the aforementioned properties. The non-ionic dispersing agent may aggregate on the surface of the metal nanoparticles and sterically hinder the particles from agglomerating. Furthermore, without wishing to be bound by theory, the steric hindrance may be beneficial in providing a fixed color since it establishes a minimum distance between the nanoparticles.

In some embodiments, it may be particularly advantageous that the dispersing agent comprises a homopolymer or copolymer of vinylpyrrolidone and/or homopolymer or copolymer of vinyl alcohol, and mixtures thereof, more specifically homopolymer and/or copolymer of vinylpyrrolidone, even more specifically polyvinylpyrrolidone (PVP).

More specifically the homo and/or copolymer(s), in particular the homopolymer of vinylpyrrolidone may have a weight-average molecular weight of above 5 kDa, specifically between 15 and 2000 kDa, more specifically between 30 and 500 kDa, even more specifically between 80 and 350 kDa, such as PVP K30. More specifically the homo and/or copolymer(s), in particular the homopolymer of vinyl alcohol may have a weight-average molecular of above 20 kDa, specifically between 50 and 100 kDa, more specifically between 60 and 80 kDa.

In some embodiments, the aqueous gel ink (further) comprises an ionic dispersing agent, more specifically a negatively charged ionic dispersing agent. The ionic dispersing agent may act by aggregating on the surface of the metal nanoparticles which are then repulsed from each other.

In some embodiments, it may be particularly advantageous that the ionic dispersing agent is a salt of citric acid, in particular an alkali metal salt and/or alkaline earth metal salt of citrate, more specifically from an alkali citrate salt, in particular sodium citrate. The salts of citric acid, also known as citrate salts, may come with various levels (mono-, di-, tri-) of different metal cations such calcium, potassium or sodium, which are all encompassed by the present definition of a salt of citric acid. Specific salts of citric acid which may be used in the present disclosure also include aluminium citrate, calcium citrate, copper citrate, diammonium citrate, disodium citrate, cupric citrate, ferric citrate, magnesium citrate, manganese citrate, monosodium citrate, potassium citrate, sodium citrate, zinc citrate. Specifically, the salts of citric acid of the present invention are sodium citrate, potassium citrate, and diammonium citrate.

Without being bound by theory, the dispersing agent(s) may *i.a.* avoid the agglomeration and/or aggregation and/or sedimentation of the metal nanoparticles. Such agglomeration and/or aggregation and/or sedimentation may impede or prevent the formation of a plasmonic effect. As said above, it is further believed that the dispersing agent is facilitating the concentration of aqueous dispersions containing metal nanoparticles, in particular if the concentration is performed by centrifugation or filtration.

In some embodiments, the amount of dispersing agent is ranging from 0.01 to 10 weight%, more specifically ranging from 0.01 to 5 weight %, more specifically 0.05 to 1 wt.-%, and in particular 0.1 to 0.5 wt.-%, based on the total weight of the aqueous gel ink.

In some embodiments, the aqueous gel ink comprises a ionic dispersing agent having a molecular weight of from 100 to 2000 g/mol, more specifically from 150 to 1000 g/mol, and in particular from 200 to 600 g/mol; and advantageously a salt of citric acid, in particular an alkali metal salt and/or alkaline earth metal salt of citrate, more specifically from an alkali citrate salt, in particular sodium citrate; wherein the amount of said ionic dispersing agent is ranging from 0.02 to 2, more specifically 0.04 to 1, and in particular 0.08 to 0.6 $\mu$g/ml.

In some embodiments, the aqueous gel ink (further) comprises a ionic dispersing agent having the weight-average molecular weight of above 5 kDa, specifically between 15 and 2000 kDa, more specifically between 30 and 500 kDa, even more specifically between 80 and 350 kDa, in particular a homopolymer or copolymer of vinylpyrrolidone and/or homopolymer or copolymer of vinyl alcohol, and mixtures thereof, more specifically homopolymer and/or copolymer of vinylpyrrolidone, even more specifically polyvinylpyrrolidone (PVP), wherein the amount of said non-ionic dispersing agent is ranging from 0.2 to 10, more specifically 0. 8 to 6, and in particular 1 to 4 $\mu$g/ml.

In some embodiments, the aqueous gel ink further comprises one or more reducing agents and/or its residuals, more specifically one or more reducing agents and/or its residuals selected from:

ascorbic acid and its salts, in particular its sodium and potassium salts;
hydrides, specifically alkali metal hydrides, in particular sodium borohydride $NaBH_4$;
oxalic acid and its salts, in particular its sodium and potassium salts;
formic acid and its salts, in particular its sodium and potassium salts;
formaldehyde;
hydroxylamine ($NH_2OH$);
hydrazine and substituted hydrazines, in particular 1,1-dimethylhydrazine or 1,2-dimethylhydrazine;
hydrosulfite salts, in particular sodium sodium hydrosulfite or sodium hydrosulfite;
trialkylstannane, in particular triethylstanne or tributylstannane,
tributyltin hydride,
phosphines, in particular trialkylphosphines or triphenylphosphine,
phosphites, in particular trialkylphosphites or triphenylphosphite,
silanes, in particular trichlorosilane, triethylsilane, tris(trimethylsilyl)silane and/or polymethylhydroxylisane,
esters of retinol of formula (I):

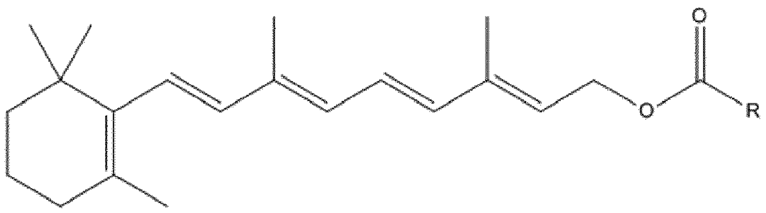

(I)

wherein R is an optionally substituted $C_1$-$C_6$ aliphatic group, more specifically a (Ci-$C_6$)alkyl group;
esters, amides and thioesters of citric acid and salts and solvates thereof;
N-acyl-aminophenol, wherein said hydroxyl group is in particular in meta or in para position on the benzenic group, preferably in para position, preferably an N-acyl-aminophenol of formula HO-$R_1$-NH-CO-$R_2$ wherein $R_1$ is a benzene ring and $R_2$ is an alkyl group comprising preferably from 1 to 6 carbon atoms, preferably from 1 to 3 carbon atoms, preferably the hydroxyl group is preferably in meta or in para position, preferably in para position;
and in particular the reducing agent comprises sodium borohydride and/or ascorbic acid.

In some embodiments, in the ester (s) of retinol of above formula (I), R represents a $C_1$-$C_6$ aliphatic group, said aliphatic group being optionally substituted with at least one hydroxyl, halogen, amino, $C_1$-$C_3$ alkyl and/or $C_1$-$C_3$ alkoxy group, said aliphatic group being more specifically a $C_1$-$C_6$ alkyl group, still more specifically a $C_1$-$C_4$ alkyl group, in particular a methyl group, more particularly unsubstituted. The ester of retinol represented by the formula (I), wherein R represents a methyl group, is commonly known as retinyl acetate (CAS number: 127-47-9), also known as vitamin A acetate, which may be purchased via Sigma-Aldrich.

In some embodiments, the N-acyl-aminophenol is N-acetyl-para-aminophenol.

In some embodiments, in formula HO-$R^1$-NH-CO-$R^2$, $R^1$ is a benzene ring, $R^2$ is a methyl radical, and the hydroxyl group is in para position. The N-acetyl-para-aminophenol (CAS number: 103-90-2), also known as paracetamol or acetaminophen, may be purchased under different trade name such as Doliprane®, Tylenol®, Calpol®, Panadol®, Dafalgan®, Efferalgan®, etc.

In some embodiments, the alkali metal hydride may be selected among sodium borohydride ($NaBH_4$), sodium cyanoborohydride ($NaBH_3CN$), sodium triacetoxy borohydride ($NaHB(OAc)_3$), sodium tri-sec-butylborohydride, potassium tri-sec-butylborohydride, potassium triethylborohydride, lithium triethylborohydride, lithium tri-sec-butylborohydride, nickel borohydride, lithium aluminate hydride, diisobutylaluminium hydride, sodium bis (2-methoxyethoxyaluminium hydride.

In some embodiments, the derivatives of citric acid may be chosen from esters, amides and thioesters of citric acid, salts of citric acid or of said derivatives, solvates of citric acid or of said derivatives, such as hydrates, and mixtures thereof. The suppliers of citric acid and/or derivatives are chosen among: Fluka™, Sigma-Aldrich™, TCI chemicals™.

In some embodiments, the esters of citric acid are alkyl esters, preferably $C_{1-30}$ alkyl esters, specifically $C_{1-20}$ alkyl esters, and in particular $C_{1-6}$ alkyl esters. The esters of citric acid may be monoesters, diesters and/or triesters, specifically triesters of citric acid. The esters of citric acid may include isodecyl citrate, isopropyl citrate, stearyl citrate, dilauryl citrate, distearyl citrate, tributyl citrate, tricaprylyl citrate, triethyl citrate, triethylhexyl citrate, trihexyldecyle citrate, triisocetyl citrate, trilauryl citrate, trioctyldodecyl citrate, trioleyl citrate, triisostearyl citrate, tristearyl citrates, ethyl citrates, tri-$C_{12-15}$-alkyl citrate such as tributyl citrate or triethyl citrate, tricaprylyl citrate, triethylhexyl citrate, triisocetyl citrate, trioctyldodecyl citrate, triisostearyl citrate, isodecyl citrate, stearyl citrate, dilauryl citrate, and ethyl citrate. In some embodiments, the esters of citric acid of the present invention are tributyl citrate and triethyl citrate.

In some embodiments, the amides of citric acid may be prepared by the reaction of primary amines with citric acid. The amination reaction to form the amide may be performed using a variety of conditions well known in the organic chemical art as described in the Kirk-Othmer Encyclopedia of Chemical Technology, 4th Ed., Vol. 2, p. 348-351. One exemplary method involves the reaction of citric acid with 3 or more equivalents in a protic solvent. All primary amines or mixtures of primary amines containing preferably the requisite $C_1$ to $C_{18}$ alkyl substituents may be utilized for the preparation of the tri-alkylcitramides of this invention. The alkyl groups in the citramides may be the same or different and may be linear or branched. Examples of suitable alkyl groups are methyl, ethyl, *n*-propyl, isopropyl, *n*-butyl, *iso*-butyl, *sec*-butyl, *n*-pentyl, 2-pentyl, 3-pentyl, *iso*-pentyl, neopentyl, cyclopentyl, 2-methylbutyl, 3-methyl-2-butyl, *n*-hexyl, 2-hexyl, 3-hexyl, cyclohexyl, 2-ethylbutyl, 4-methyl-2-pentyl, *n*-heptyl, *n*-octyl, *n*-2-ethylhexyl, *n*-nonyl, *n*-decyl, *n*-undecyl, *n*-dodecyl. Specifically, the amides of citric acid may be tri-butyl citramide and triethyl citramide.

In some embodiments, the thioesters of citric acid may be prepared by the reaction of thiol and derivatives with citric acid. Several examples of thiols and derivatives can be used: allyl mercaptan, 2-aminoethanethiol, 2-aminobenzenethiol, 3-aminobenzenethiol, 4-aminobenzenethiol, 1,3-benzenedimethanethiol, 1,4-benzenedimethanethiol. Specifically, the thioester of citric acid may be obtained by reaction between an allyl mercaptan and citric acid.

In some embodiments, it may be particularly advantageous that the reducing agent of the aqueous gel ink is selected from:

- ascorbic acid;
- alkali metal hydride, specifically sodium borohydride $NaBH_4$;
- and a mixture thereof.

It should also be understood that the metal nanoparticles contained in the aqueous gel ink are preparable by chemically reducing metal ions. Therefore, in some embodiments, the reducing agent may already be (largely) consumed in the process of preparing the nanoparticles and that (mostly) residuals of the reducing agents, e.g. their oxidized forms or a products of further decomposition, are present. For example, an exemplary synthesis of nanoparticles may follow the following reaction scheme: $2\ AgNO_3 + 2\ NaBH_4 \rightarrow 2\ Ag$ (metal) + $H_2$ (gas) + $B_2H_6 + 2\ NaNO_3$. The diborane ($B_2H_6$) may be considered as the residual of $NaBH_4$.

In some embodiments, the (total) amount of reducing agent(s) or its/their residuals in the aqueous gel ink ranges from 0.0000001 % to 0.5 % by weight, relative to the total weight of the aqueous gel ink.

In some embodiments, the aqueous gel ink further contains one or more of: a co-solvent, an antimicrobial agent, a corrosion inhibitor, an antifoam agent, and/or a rheology modifier. These components will be described below.

In some embodiments, the aqueous gel ink may comprise a co-solvent. Among the co-solvents that can be used, mention may be made of polar solvents miscible in water such as:

- glycol ethers such as triethylene glycol, polyethylene glycol, diethylene glycol monoethyl ether, diethylene-glycol-mono butyl ether, dipropyleneglycol monobutyl ether, tripropylene glycol monomethyl etherphenoxyethanol, phenoxypropanol,
- alcoholssuch as linear or branched alcohol in $C_1$-$C_{15}$ such as benzyl alcohol, glycerin, diglycerin, polyglycerin,
- esters such as ethyl acetate or propyl acetate,
- carbonate esters such as propylene carbonate or ethylene carbonate, and
- mixtures thereof.

In a specific embodiment, the co-solvent is chosen in the group consisting of glycol ethers, and more specifically is chosen in the group consisting of triethylene glycol, polyethylene glycol, diethylene glycol monoethyl ether, diethylene-glycol-mono butyl ether, dipropyleneglycol monobutyl ether, tripropylene glycol monomethyl ether, phenoxyethanol, phenoxypropanol, and mixture thereof. In a further specific embodiment, the co-solvent is chosen in the group consisting of triethylene glycol, polyethylene glycol and mixture thereof.

In some embodiments, the total amount of the co-solvent in the aqueous gel ink ranges from 5 to 35%, more specifically from 9 to 30%, even more specifically from 11 to 25%, by weight relative to the total weight of the aqueous gel ink.

In some embodiments, the aqueous gel ink may comprise an antimicrobial agent such as isothiazolinone (ACTICIDE® from Thor), specifically chosen in the group consisting of 1,2-benzisothiazolin-3-one, 2-methyl-4-isothiazolin-3-one, and mixture thereof.

Specifically, the total amount of the antimicrobial agent in the aqueous gel ink may range from 0.01 to 0.5%, more specifically from 0.1 to 0.2%, by weight relative to the total weight of the aqueous gel ink.

In some embodiments, the aqueous gel ink may comprise a corrosion inhibitor, specifically chosen in the group consisting of tolytriazole, benzotriazole, and mixture thereof.

Specifically, the total amount of the corrosion inhibitor in the aqueous gel ink may range from 0.05 to 1%, more specifically from 0.07 to 0.6%, even more specifically from 0.08 to 0.4%, by weight relative to the total weight of the aqueous gel ink.

In some embodiments, the aqueous gel ink may comprise an antifoam agent, specifically a polysiloxane-based antifoam agent, and more specifically an aqueous emulsion of modified polysiloxane (such as MOUSSEX® from Synthron, TEGO® Foamex from Evonik).

Specifically, the total amount of the antifoam agent in the aqueous gel ink may range from 0.05 to 1%, more specifically from 0.1 to 0.5%, even more specifically from 0.2 to 0.4%, by weight relative to the total weight of the aqueous gel ink.

The aqueous gel ink may comprise a rheology modifier capable of generating a gelling effect, in particular capable of generating a thixotropic phenomenon wherein the viscosity depends on the time of shear rate, for example chosen in the group consisting of polysaccharides such as xanthan gum, gum arabic, and mixture thereof.

Further, the gelling agent and/or co-solvent, in particular if the gelling agent and/or co-solvent are water-soluble, may form a matrix at least partially embedding the plasmonic ink composition's nanoparticles when the plasmonic ink compositions dries. The matrix may secure the plasmonic ink's nanoparticles to the surface of the writing substrate, in particular synthetic paper. In particular, the matrix may be disposed in the rough surface of the synthetic paper, e.g. within the pores, preventing smudging of the notes disposed on the paper when rubbed with a finger or a dry cloth. When wiped with a wet cloth, the matrix may be soluted or softened allowing the plasmonic nanoparticles being wiped away and/or spread out.

Specifically, the total amount of the rheology modifier in the aqueous gel ink may range from 0.08 to 2%, more specifically from 0.2 to 0.8%, even more specifically from 0.3 to 0.6%, by weight relative to the total weight of the aqueous gel ink.

In some embodiments, the aqueous gel ink may also comprise still other additives such as:

- pH regulators like sodium hydroxide and triethanolamine,
- lubricants,
- coalescing agents,
- crosslinking agents,
- wetting agents,
- plasticizers,
- antioxidants, and
- UV stabilizers.

In some embodiments, the aqueous gel ink does not contain any other coloring agent than the metal nanoparticles. Therefore, it does in particular not contain any dyes or pigments.

In some embodiments, the aqueous gel ink has a color selected from red, orange, yellow, green, cyan, blue, magenta, purple, black, gray, pink, maroon, brown, beige, tan, peach, lime, olive, turquoise, teal, navy blue, indigo, and violet; more specifically a color selected from red, green, black or blue and in particular black or blue.

It should be noted that an ink intended for use in a writing instrument requires a different composition compared to for example a "printing ink" used for printing devices. Accordingly, for the purposes of the present disclosure, the term "ink" is intended to mean a "writing ink" which is intended to be used in a writing instrument, and in particular in a pen. A writing ink should not be confused with a "printing ink" which is used in printing machines and which does not have the same technical constraints and thus the same specifications. Indeed, a writing ink must not contain solid particles of which the size is greater than the channels of the writing instrument, in order to avoid blocking them, which would inevitably lead to writing being irreversibly stopped. In addition, it must allow an ink flow rate suitable for the writing instrument used. It must also dry sufficiently rapidly to avoid smudging the writing medium. It must also avoid the problems of migration (bleeding) over time. Thus, the ink according to the present invention will be suitable for the writing instrument for which it is intended, in particular for a pen.

In addition, a "writing ink" must not be too fluid, so as to avoid leaks during writing. However, it must be sufficiently fluid to facilitate the flow of the writing action. In the particular case of the present disclosure, the writing ink is more specifically a "gel ink" (which corresponds therefore to a thixotropic ink), in particular the viscosity measured at rest (at a shear rate of 0.01 $s^{-1}$) at 20°C is different and in particular higher than the viscosity measured with a shear rate of 100 $s^{-1}$ at 20°C using the same rheometer such as a cone-and-plate rheometer for example Malvern KINEXUS with a cone of 60 mm and an angle of 1°.

In a particular embodiment, the viscosity of the gel ink according to the present invention measured under these conditions ranges from 1,000 to 7,000 mPa.s, specifically from 2,000 to 5,000 mPa.s, and more specifically from 2,500 to 3,500 mPa.s, at rest (i.e. with a shear rate of 1 $s^{-1}$), and specifically from 5 to 50 mPa.s, more specifically from 7 to 40 mPa.s, and still more specifically from 10 to 20 mPa.s with a shear rate of 5,000 $s^{-1}$. Specifically, in some embodiments,

said viscosity is stable during storage for at least three months at 40°C and 20% relative humidity, in particular the viscosity will not have a more than 50% decrease in said time period. More specifically, the return to viscosity at rest after shear may additionally be very quick, specifically at most a few (e.g. 1, 2, 3, 4 or 5) minutes, in order to avoid static leakage in the minutes after writing.

The cloth

In some embodiments, the kit of parts may comprise a cloth. The term "cloth" within this disclosure may relate to any pliable material which can be infused with water. Hence, the term may refer to materials made by weaving, felting or knitting of natural or synthetic fibers or filaments, or for example to a sponge.

The writing instrument

The writing instrument is not particularly limited and in particular includes handheld writing instruments. For the purposes of writing in vivid and saturated colors, it may be particularly advantageous to use high-laydown writing instruments as described further below, in particular in combination with inks comprising metal nanoparticles in an amount of 0.5 - 2.5 wt.-%, relative to the total weight of the ink.

In some embodiments, the writing instrument comprises a writing tip and an ink reservoir connected to the writing tip, wherein the ink reservoir is sized to contain at least 100 μl of ink. The ink reservoir contains an aqueous gel ink, comprising metal nanoparticles as the (plasmonic) coloring agent. The writing instrument is further configured for a high laydown, i.e. is configured to dispense 150 - 800 mg/100m, specifically 200 - 700 mg/100m, more specifically 250 - 600 mg/100m and in particular 250-500 mg/100m. The determination of the laydown is not particularly limited and can be done as indicated in the below experimental section.

In some embodiments, the ink reservoir is sized to contain at least 100 μl of ink, for instance 100 μl to 20 ml, more specifically 150 μl to 5 ml, and in particular 200 μl to 2 ml, of ink.

In some embodiments, writing instrument may be selected from the group consisting of gel pens, felt pens, markers, and be specifically a gel pen.

In some embodiments, the writing tip of the writing instrument may comprise a ball point having a ball size of between about 0.6 mm and about 2 mm, in particular between about 0.7 mm and about 1.5 mm. In some embodiments, the writing tip may comprise a ball point comprising a ball rotably located within a writing orifice, wherein a gap between the writing orifice and the ball has a width has a width of between about 5 μm to about 30 μm, more specifically between about 5 μm to about 25 μm and in particular between about 10 μm to about 25 μm. A gap between the writing orifice and the ball of these sizes may be beneficial for providing the required high laydown but without causing undue static or dynamic leakage during storage or after writing.

In a second aspect, the present disclosure relates to a use of a writing instrument to apply a plasmonic ink composition on a synthetic paper. In some embodiments according to the second aspect, the plasmonic ink composition may be wiped with a cloth, in particular a wet cloth, after application.

The removal of the notes may be visually assessed. Alternatively, in some embodiments, according to the second aspect an area marked by the plasmonic ink composition may display a first intensity after application, in particular after drying, and the area marked by the plasmonic ink composition may display a second intensity after being wiped with a cloth, more specifically a wet cloth, in particular wherein the second intensity is lower than the first intensity by at least 50%, more specifically by at least 80% and in particular by at least 90%. The intensity may be measured using a spectrophotometer. For example, a KONICA MINOLTA CM-3610 A spectrophotometer may be used to measure the reflectance of the deposited ink prior to wiping, and the same part of the synthetic paper where the ink was deposited upon after wiping. The plasmonic ink composition may be left to dry before measuring and before being wiped away for at least 10 minutes, more specifically 60 minutes. Further, the reflectance of unmarked synthetic paper may be measured as a baseline. The corresponding ink intensity may then be calculated by subtracting the measured reflectance from the baseline. It should be noted that the spectrophotometer may output the reflectance as a percent value. However, that the second intensity is lower than the first intensity shall be calculated as a relative reduction, not an absolute reduction, hence according to the following equation (1).

$$\textit{Relative Reduction in Ink Intensity} = \frac{\textit{Second Intensity}}{\textit{First Intensity}} \qquad (1)$$

The plasmonic ink composition may be removable long after having been deposited on the synthetic paper. Therefore, in some embodiments, according to the second aspect between applying and wiping a duration of at least 5 minutes, more specifically of at least 1 hour, even more specifically at least 168 hours and in particular at least720 hours

may have elapsed. For example, a duration from 5 minutes to 3 months may have elapsed between applying and wiping the ink from the substrate.

In a third aspect, the present disclosure relates to a method for writing on a writing substrate, wherein the method may comprise applying a plasmonic ink composition using a writing instrument on a writing substrate, and wiping away the plasmonic ink composition using a cloth, in particular a wet cloth.

In some embodiments, according to the third aspect the writing substrate may be a synthetic paper.

Some synthetic papers may allow improved digital processing of writing or of drawings, e.g. by providing optical markers for algorithms for improved processing of the image data. Hence, Hence, the method for writing on a synthetic paper according to the third aspect, may additionally comprise acquiring an image of the plasmonic ink composition applied on the writing substrate; and digitally processing the acquired image before wiping away the plasmonic ink composition. The writing substrate, in particular the synthetic paper, in conjunction with the plasmonic ink composition may therefore be used write or draw, digitalize the writing or drawing and subsequently reuse the synthetic paper.

**Example**

Preparation of an aqueous suspension of silver seed nanoparticles

An aqueous suspension of silver seed nanoparticles is prepared by mixing a total amount of 3516.79g of distilled water, 0.12g of silver nitrate (9370.1 CarkRoth), 0.19g of trisodium citrate (S1804-500G Sigma Aldrich). The mixture was homogenised with a homogenizer mixer at a speed of 400 rpm for 1 minute. Then, 0.04g of sodium borohydride $NaBH_4$ (71321-25G Fluka Analytical) were added dropwise. The yellow solution obtained was then stored in the dark and aged for 2 hours. The materials are summarized below:

| Material | Quantity |
|---|---|
| Water (total) | 3516.79g |
| Silver nitrate (in solution) | 0.12g |
| Sodium citrate (in solution) | 0.19g |
| Sodium Borohydride (in solution) | 0.04g |
| TOTAL of seeds solution | 3517.13g |

Preparation of an aqueous suspension of silver nanoparticles with a fixed color

An aqueous suspension of silver nanoparticles with a fixed colour is prepared by mixing to homogeneity 372815.1 g of distilled water and 879.74g of polyvinylpyrrolidone (PVP K30, Sigma Aldrich). Then, 3517.13g of the seed solution obtained in the step above, 68.18g of trisodium citrate (S1804-500G Sigma Aldrich), 30.93g of ascorbic acid (A92902-100G Sigma Aldrich) are added, in that order. The mixture was homogenised with a homogenizer mixer at a speed of 400 rpm for 1 minute. Then, 14.91g of $AgNO_3$ were slowly added to the mixture with a homogenizer mixer at a speed of 400 rpm. The color of the solution changes from colorless to yellow, red and finally dark-green.

The materials are summarized below:

| Material | Quantity for 377326 g of nanoparticles slurry |
|---|---|
| Water | 372815.1g |
| PVP K30 (40000 g/mol) | 879.74g |
| Seeds (step 1) | 3517.13g |
| Sodium citrate | 68.18g |
| Ascorbic acid | 30.93g |
| Silver nitrate | 14.91g |
| | |
| Total silver nanoparticles slurry | 377326g |

Concentration step of the metal nanoparticles by nanofiltration

One minute after the last addition of $AgNO_3$, the aqueous suspension of silver nanoparticles was subjected to nanofiltration using the filtration system VariMem™ Nano, obtainable from Pall Corporation. The nanoparticles are retained by a polysulfone membrane (SLP-1053: Polysulfone - 10 kDa). The concentration is carried out continuously, the pressure is fixed at 0.7 bar for a flow rate of 12 L/min. Using nanofiltration, the nanoparticles were fast and very efficiently concentrated to about 1/500$^{th}$ of the initial volume of the aqueous suspension without agglomeration. The concentrated aqueous suspension is black.

Preparation of the aqueous gel ink with fixed color

In a beaker, 100g glycerin, 80g polyethylene glycol 200 and 1.9g Biocide Acticide MBS are blended and 3g xanthan gum powder is added under strong mixing until a good powder dispersion is obtained. The obtained gel matrix is mixed with the concentrated aqueous suspension. The resulting ink is stirred for 3 hours. To summarize, the ink had an overall composition as follows:

| **Component** | **Quantity** |
|---|---|
| Plasmonic coloring material (preparation described before) | 815.1g |
| Glycerin | 100g |
| Polyethylen glycol 200 | 80g |
| Acticide MBS | 1.9g |
| Xanthan Gum | 3g |
| **TOTAL** | **1000g** |

The obtained aqueous gel ink is black. The aqueous gel comprises about 0.8 % by weight of Ag nanoparticles.

The ink was filled into a Gelocity Illusion ink cartridge comprised within a Gelocity Illusion gel pen, sold by the company BIC S.A., France. The writing instrument had a gap between the writing ball and the writing orifice with a width of 20 µm. Writing tests were performed as well as measurement of the laydown.

Measurement of the laydown:

The laydown of a pen as above can be determined as follows:
Measure the quantity of ink deposited at room temperature and 50% RH when realizing a 100 meter length writing line on a paper ISO12757, with a scriptometer such as Minitec, Hutt or Mikron apparatus, with a writing angle 70% and at a speed of writing of 4.5 m/min. The total weight of the writing instrument assembly (writing instrument + support + adjusting weights) between about 95 to about 100g. The test was performed according to the standard ISO 27668-1:2017.

A laydown of 300 mg/100m has been measured according to this protocol.

Test for Application on synthetic paper

The writing instrument was used to mark a synthetic paper by hand. The outer layer of the synthetic paper comprised about 80 wt.-% calcium carbonate particles and about 20 wt.-% polyethylene.

The application of the ink with the writing instrument resulted in a clear typography.

Resistance to Smudging

The applied ink was left to dry for 5 minutes. Subsequently, a first part of the deposited ink was rubbed with a dry cloth which did not result in significant smudging. Thereafter, a second part of the deposited ink was rubbed with a dry finger which did not result in significant smudging.

The test was repeated after 1 hour, 1 day, 1 week, 1 month and three months on different parts of the ink, which also resulted in no significant smudging.

Removal of Plasmonic Ink

The deposited ink was rubbed by hand with a wet cloth, in particular a wet microfiber cloth for 1 minute. The test was performed on different part of deposited ink after 5 minutes, 1 hour, 1 day, 1 week, 1 month and three months. After all durations the deposited ink became substantially unnoticeable.

**Embodiments**

Although the present invention is defined in the attached claims, it should be understood that the present invention can also (alternatively) be defined in accordance with the following embodiments:

1. A kit of parts, wherein the kit of parts comprises a writing instrument comprising a plasmonic ink composition; and a synthetic paper.

2. The kit of parts according to embodiment 1, wherein the synthetic paper, in particular an outer layer of the synthetic paper, comprises a first polymer, more specifically non-polar polymer, in particular a polyolefin.

3. The kit of parts according to embodiment 2, wherein the first polymer comprises polypropylene, polyethylene, a polyvinyl and/or an acrylate polymer, in particular biaxially oriented polypropylene and/or high-density polyethylene.

4. The kit of parts according to any preceding embodiment, wherein the synthetic paper, in particular an inner layer of the synthetic paper, comprises a second polymer, more specifically a polymer comprising styrene, in particular polystyrene or copolymers thereof.

5. The kit of parts according to any preceding embodiment, wherein the synthetic paper, in particular the outer layer, comprises a filler, more specifically an inorganic filler and in particular calcium carbonate.

6. The kit of parts according to embodiment 5, wherein the synthetic paper, in particular the outer layer, comprises between about 5 wt.-% to about 95 wt.-%, more specifically between about 50 wt.-% to about 90 wt.-% and in particular between about 75 wt.-% to about 85 wt.-% of the filler, relative to the total weight of the synthetic paper.

7. The kit of parts according to any one of embodiments 2 to 6, wherein the synthetic paper comprises between about 5 wt.-% to about 100 wt.-%, more specifically between about 10 wt.-% to about 50 wt.-% and in particular between about 15 wt.-% to about 25 wt.-% of the first and second polymer, relative to the total weight of the synthetic paper.

8. The kit of parts according to any one of embodiments 4 to 7, wherein the inner layer comprises between about 5 wt.-% to about 80 wt.-%, more specifically between about 10 wt.-% to about 50 wt.-% and in particular between about 15 wt.-% to about 30 wt.-% of the second polymer, relative to the total weight of the second layer.

9. The kit of parts according to any one of embodiments 2 to 8, wherein the outer layer comprises between about 50 wt.-% to about 100 wt.-%, more specifically between about 70 wt.-% to about 95 wt.-% and in particular between about 70 wt.-% to about 90 wt.-% of the first polymer, relative to the total weight of the first layer.

10. The kit of parts according to any preceding embodiment, wherein the synthetic paper, in particular the outer layer, comprises less than 10 wt.-%, more specifically less than 5 wt.-% of fibers.

11. The kit of parts according to any preceding embodiment, wherein the synthetic paper, in particular the outer layer, comprises less than 10 wt.-%, more specifically less than 5 wt.-% and in particular no cellulose.

12. The kit of parts according to any preceding embodiment, wherein the synthetic paper is waterproof and/or water-resistant.

13. The kit of parts according to any preceding embodiment, wherein the synthetic paper exhibits an arithmetical mean roughness, Ra, between about 0.3 μm to about 5 μm, more specifically between about 0.4 μm to about 4 μm and in particular between about 1 μm to about 3.5 μm..

14. The kit of parts according to any preceding embodiment, wherein the synthetic paper, in particular the outer

layer, comprises between about 5 vol.-% to about 95 vol.-%, more specifically between about 15 vol.-% to about 85 vol.-% and in particular between about 25 vol.-% to about 75 vol.-% of pores.

15. The kit of parts according to any preceding embodiment, wherein the plasmonic ink composition comprises metal nanoparticles.

16. The kit of parts according to embodiment 15, wherein the metal nanoparticle's average particle size may be between about 1 to 200 nm, specifically from 2 to 100 nm, more specifically from 5 to 100 nm.

17. The kit of parts according to embodiment 15 or 16, wherein the plasmonic ink composition comprises between about 0.5 to 2.5 wt.-%, more specifically from 0.6 - 2.0 wt.-%, more specifically from 0.65 to 1. wt.-%, and in particular more specifically from 0.7 to 1.4 wt.-%of the metal nanoparticles, relative to the total weight of the plasmonic ink composition.

18. The kit of parts according to any one of embodiments 15 to 17, wherein the metal nanoparticles comprise at least one metal chosen from copper, silver and/or gold, more specifically silver and/or gold and in particular silver.

19. The kit of parts according any one of embodiments 15 to 18, wherein the metal nanoparticles comprise at least 90 wt.-%, more specifically at least 99 wt.-% of the metal and in particular wherein the nanoparticles consist of the metal, except for technically unavoidable impurities.

20. The kit of parts according to any preceding embodiment, wherein the plasmonic ink composition comprises citrate ions and/or mono-hydrogen citrate ions.

21. Use of a writing instrument to apply a plasmonic ink composition on a synthetic paper.

22. The use according to embodiment 21, wherein the plasmonic ink composition is wiped with a wet cloth after application.

23. The use according to embodiment 21 or 22, wherein the plasmonic ink composition displays a first intensity after application, in particular after drying,

and wherein the plasmonic ink composition displays a second intensity after being wiped with a wet cloth, wherein the second intensity is lower than the first intensity by at least 50%, more specifically by at least 80% and in particular by at least 90%.

24. The use according to embodiment 23, wherein between applying and wiping a duration of at least 5 minutes, more specifically of at least 1 hour, even more specifically at least 168 hours and in particular at least 720 hours has elapsed.

25. A method for writing on a writing substrate, wherein the method comprises:

- applying a plasmonic ink composition using a writing instrument on a writing substrate, and
- wiping away the plasmonic ink composition using a wet cloth.

26. The method according to embodiment 25, wherein the writing substrate is a synthetic paper.

27. The method for writing on a writing substrate according to embodiment 25 or 26, wherein the method additionally comprises:

- acquiring an image of the plasmonic ink composition applied on the synthetic paper;
- digitally processing the acquired image before wiping away the plasmonic ink composition.

## Claims

**1.** A kit of parts, wherein the kit of parts comprises a writing instrument comprising a plasmonic ink composition; and a synthetic paper.

**2.** The kit of parts according to claim 1, wherein the synthetic paper, in particular an outer layer of the synthetic paper, comprises a first polymer, more specifically non-polar polymer, even more specifically a polyolefin, in particular polypropylene, polyethylene, a polyvinyl and/or an acrylate polymer, and even more particularly biaxially oriented polypropylene and/or high-density polyethylene.

**3.** The kit of parts according to any preceding claim, wherein the synthetic paper, in particular an inner layer of the synthetic paper, comprises a second polymer, more specifically a polymer comprising styrene, in particular polystyrene or copolymers thereof.

**4.** The kit of parts according to any preceding claim, wherein the synthetic paper, in particular the outer layer, comprises a filler, more specifically an inorganic filler and in particular calcium carbonate.

**5.** The kit of parts according to any one of claims 2 to 4, wherein the outer layer comprises between about 50 wt.-% to about 100 wt.-%, more specifically between about 70 wt.-% to about 95 wt.-% and in particular between about 70 wt.-% to about 90 wt.-% of the first polymer, relative to the total weight of the first layer.

**6.** The kit of parts according to any preceding claim, wherein the synthetic paper, in particular the outer layer, comprises less than 10 wt.-%, more specifically less than 5 wt.-% of fibers and/or wherein the synthetic paper, in particular the outer layer, comprises less than 10 wt.-%, more specifically less than 5 wt.-% and in particular no cellulose.

**7.** The kit of parts according to any preceding claim, wherein the synthetic paper is waterproof and/or water-resistant.

**8.** The kit of parts according to any preceding claim, wherein the synthetic paper exhibits an arithmetical between about 0.3 μm to about 5 μm, more specifically between about 0.4 μm to about 4 μm and in particular between about 1 μm to about 3.5 μm.

**9.** The kit of parts according to any preceding claim, wherein the synthetic paper, in particular the outer layer, comprises between about 5 vol.-% to about 95 vol.-%, more specifically between about 15 vol.-% to about 85 vol.-% and in particular between about 25 vol.-% to about 75 vol.-% of pores.

**10.** The kit of parts according to any preceding claim, wherein the plasmonic ink composition comprises metal nanoparticles and wherein the metal nanoparticle's average particle size may be between about 1 to 200 nm, specifically from 2 to 100 nm, more specifically from 5 to 100 nm.

**11.** The kit of parts according to claim 10, wherein the plasmonic ink composition comprises between about 0.5 to 2.5 wt.-%, more specifically from 0.6 - 2.0 wt.-%, more specifically from 0.65 to 1. wt.-%, and in particular more specifically from 0.7 to 1.4 wt.-%of the metal nanoparticles, relative to the total weight of the plasmonic ink composition.

**12.** The kit of parts according to any one of claims 10 or 11, wherein the metal nanoparticles comprise at least one metal chosen from copper, silver and/or gold, more specifically silver and/or gold and in particular silver.

**13.** Use of a writing instrument to apply a plasmonic ink composition on a synthetic paper.

**14.** The use according to claim 13, wherein the plasmonic ink composition displays a first intensity after application, in particular after drying,

and wherein the plasmonic ink composition displays a second intensity after being wiped with a wet cloth, wherein the second intensity is lower than the first intensity by at least 50%, more specifically by at least 80% and in particular by at least 90%.

**15.** A method for writing on a writing substrate, wherein the method comprises:

- applying a plasmonic ink composition using a writing instrument on a writing substrate, and
- wiping away the plasmonic ink composition using a wet cloth.

Figure 1

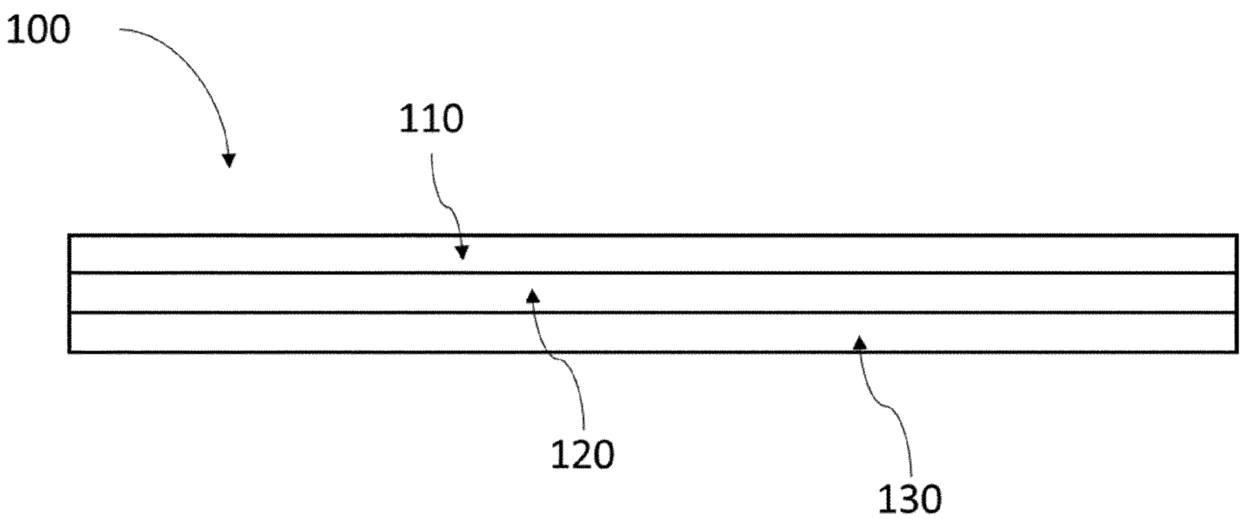

Figure 2

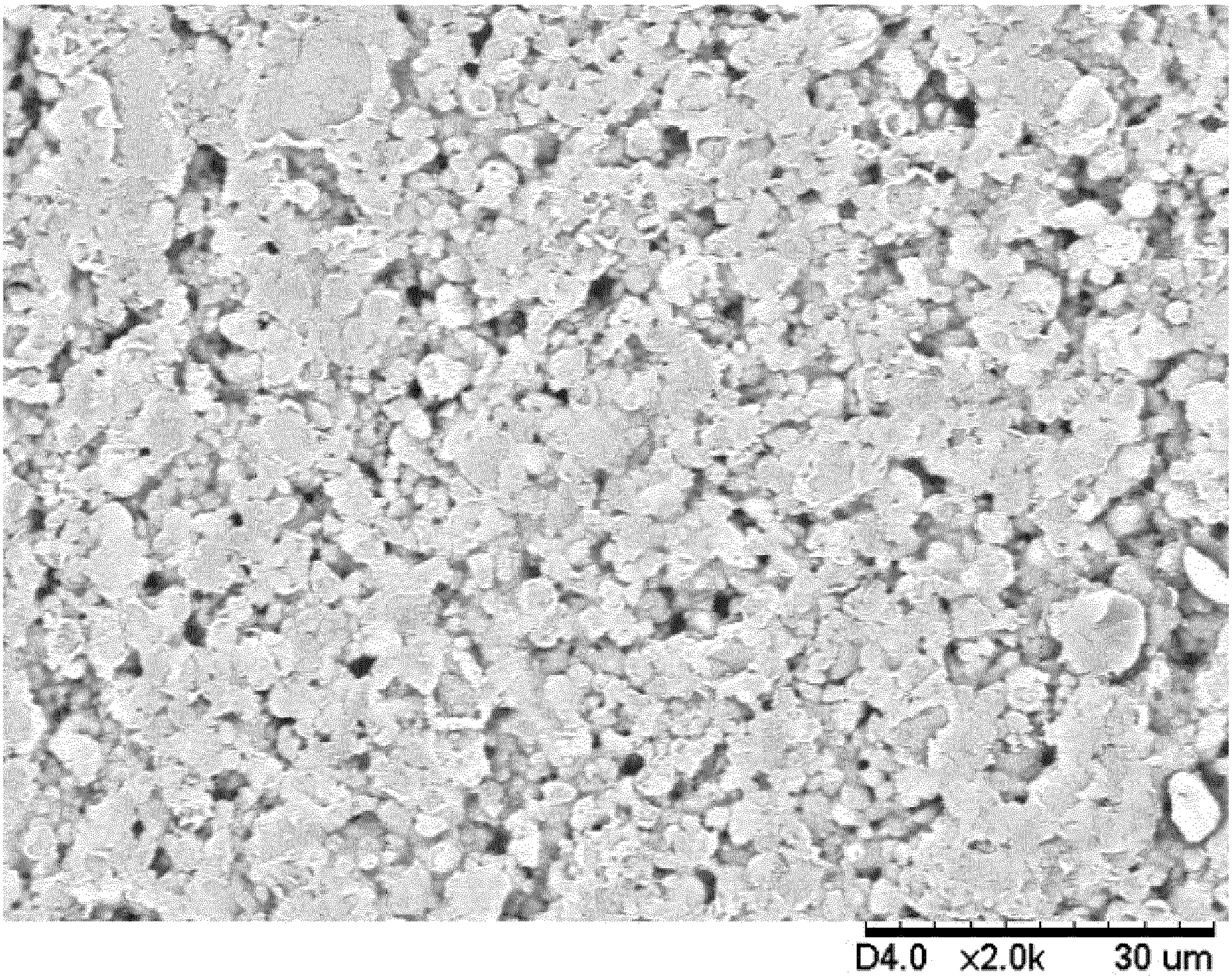

Figure 3

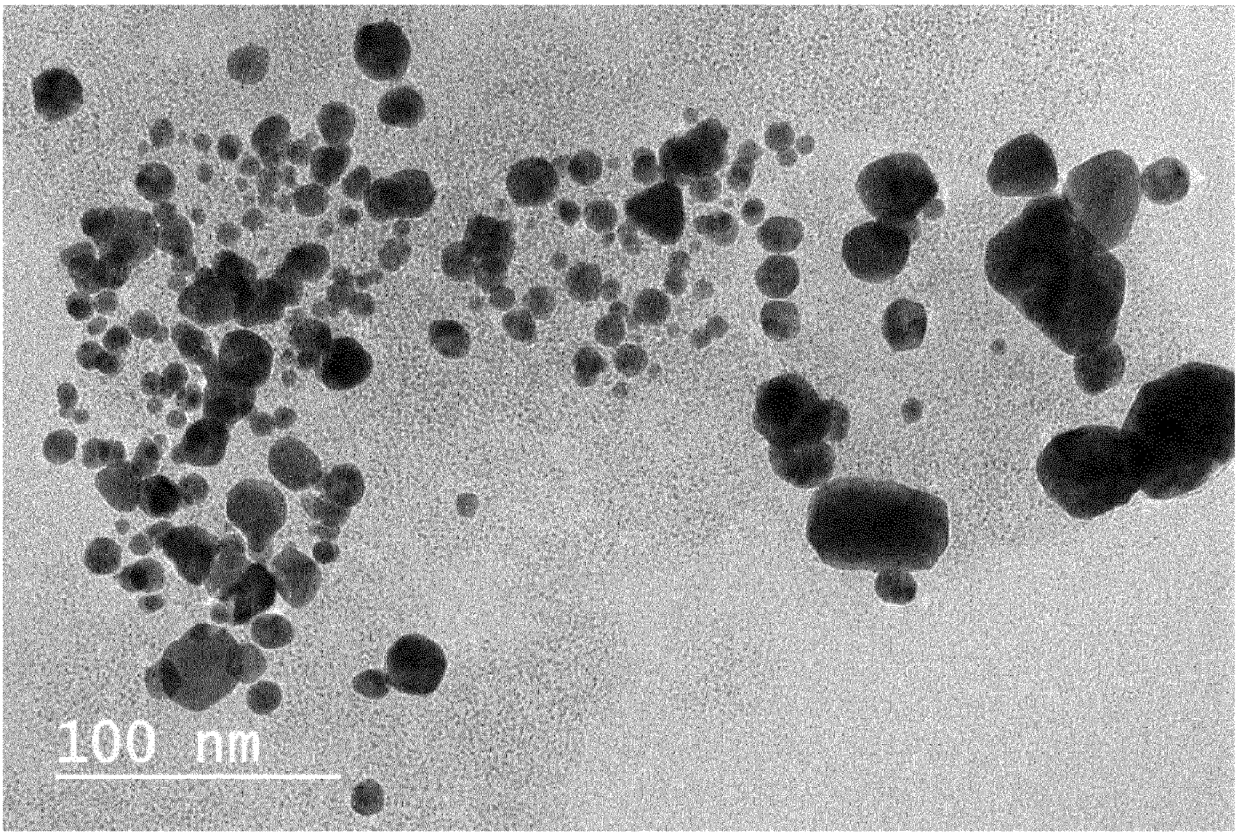

Europäisches Patentamt
European Patent Office
Office européen des brevets

# EUROPEAN SEARCH REPORT

Application Number
EP 22 30 6299

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 110 922 812 A (WANG XIAOFEI; LI YAN) 27 March 2020 (2020-03-27) * claims; examples * ----- | 1-15 | INV. C09D11/17 C09D11/18 |
| X | WO 2015/183679 A1 (ELECTRONINKS WRITEABLES INC [US]) 3 December 2015 (2015-12-03) * examples; claims 1,6,9 * ----- | 1-15 | |
| X | TIYYAGURA HANUMA REDDY ET AL: "Gold Inks for Inkjet Printing on Photo Paper: Complementary Characterisation", NANOMATERIALS, vol. 11, no. 3, 28 February 2021 (2021-02-28), page 599, XP093016923, ISSN: 2079-4991, DOI: 10.3390/nano11030599 Retrieved from the Internet: URL:https://www.ncbi.nlm.nih.gov/pmc/ivip/2079-4991/11/3/599> * the whole document * ----- | 1-15 | |
| | | | TECHNICAL FIELDS SEARCHED (IPC) |
| X | YIN ZE ET AL: "Ultrastable Plasmonic Bioink for Printable Point-Of-Care Biosensors", APPLIED MATERIALS & INTERFACES, vol. 12, no. 32, 17 July 2020 (2020-07-17), pages 35977-35985, XP93016936, US ISSN: 1944-8244, DOI: 10.1021/acsami.0c11799 * the whole document * ----- -/-- | 1-15 | C09D |

The present search report has been drawn up for all claims

1

| Place of search | Date of completion of the search | Examiner |
|---|---|---|
| Munich | 25 January 2023 | Haider, Ursula |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 22 30 6299

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/038066 A1 (SOCIÉTÉ BIC [FR]; UNIV HAUTE ALSACE [FR]; CENTRE NAT RECH SCIENT [FR]) 4 March 2021 (2021-03-04)<br>* examples;<br>claims 10-15 *<br>* page 2, line 20 - page 3, line 21 *<br>* page 10, lines 16-29 *<br>* page 1, line 29 - page 2, line 2 *<br>----- | 1-15 | |

TECHNICAL FIELDS SEARCHED (IPC)

The present search report has been drawn up for all claims

1

| Place of search | Date of completion of the search | Examiner |
|---|---|---|
| Munich | 25 January 2023 | Haider, Ursula |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 22 30 6299

This annex lists the patent family members relating to the patent documents cited in the above-mentioned European search report. The members are as contained in the European Patent Office EDP file on
The European Patent Office is in no way liable for these particulars which are merely given for the purpose of information.

25-01-2023

| Patent document cited in search report | Publication date | Patent family member(s) | Publication date |
|---|---|---|---|
| CN 110922812 A | 27-03-2020 | NONE | |
| WO 2015183679 A1 | 03-12-2015 | CN 106661360 A | 10-05-2017 |
| | | EP 3149092 A1 | 05-04-2017 |
| | | JP 6845015 B2 | 17-03-2021 |
| | | JP 2017523251 A | 17-08-2017 |
| | | JP 2021091915 A | 17-06-2021 |
| | | KR 20170017908 A | 15-02-2017 |
| | | US 2017107390 A1 | 20-04-2017 |
| | | WO 2015183679 A1 | 03-12-2015 |
| WO 2021038066 A1 | 04-03-2021 | CN 114207056 A | 18-03-2022 |
| | | EP 4021991 A1 | 06-07-2022 |
| | | JP 2022546007 A | 02-11-2022 |
| | | KR 20220053593 A | 29-04-2022 |
| | | US 2022275229 A1 | 01-09-2022 |
| | | WO 2021038066 A1 | 04-03-2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- *CHEMICAL ABSTRACTS,* 127-47-9
- *CHEMICAL ABSTRACTS,* 103-90-2
- Kirk-Othmer Encyclopedia of Chemical Technology. vol. 2, 348-351